# EUROPEAN PATENT APPLICATION

(11) **EP 1 821 221 A1**
(43) Date of publication of application: **22.08.2007**
(21) Application number: 05806111.0
(22) Date of filing: 10.11.2005
(51) Int. Cl.: G06F 17/21, G06F 12/00

(54) **DOCUMENT PROCESSING DEVICE AND DOCUMENT PROCESSING METHOD**

(30) Priority: 12.11.2004 JP 2004329630
(71) Applicant: JustSystems Corporation, Tokushima-shi, Tokushima 771-0189 (JP)
(72) Inventor: FUJIMAKI, Yusuke c/o JustSystems Corporation, Tokushima-shi Tokushima771-0189 (JP); ADACHI, Atsushi c/o JustSystems Corporation, Tokushima-shi Tokushima771-0189 (JP); MOTOHASHI, Daisuke c/o JustSystems Corporation, Tokushima-shi Tokushima771-0189 (JP)
(74) Representative: Palmer, Jonathan R.
(86) International application number: PCT/JP2005/020633
(87) International publication number: WO 2006/051869

(57) **Abstract**

To appropriately process data that is structured with a markup language.

A DOM management part, when reading a large document, generates a DOM tree once before it saves part of the information included in the DOM tree to a storage device such as a hard disk. The DOM management part may determine whether or not to save information to the storage device by comparing the memory consumption of the source tree generated and the amount of memory remaining at the present time. The DOM management part may also select which information to save to the storage device based on the memory consumption of the DOM tree, the remaining amount of memory, the remaining amount of the storage device, the operating speed of a CPU, and the like. The DOM management part retains information indicating the tree structure in the memory, and saves information such as element names, attribute names, element values, and attribute values to the storage device.

## Description

### Technical Field

The present invention relates to a document processing technique, and particularly to a document processing apparatus and a document processing method for processing a document described in a markup language.

### Background Art

XML has been attracting attention as a format that allows the user to share data with other users via a network. This encourages the development of applications for creating, displaying, and editing XML documents (see Patent document 1, for example). The XML documents are created based upon a vocabulary (tag set) defined according to a document type definition.

A DOM is a technique for reading XML content to a memory and making it possible to manipulate it by application programs, and is a common technique that is used widely.
[Patent Document 1]
Japanese Patent Application Laid-open No. 2001-290804

### Disclosure of Invention

### [Problems to be Solved by the Invention]

While a DOM is an excellent technique that allows XML to be manipulated by application programs, handling a large XML file inevitably consumes a huge memory space due to the algorithm necessary to read the entire XML to a memory and create an object tree. There has thus been a risk associated with XML-handling systems.

The present invention has been developed in view of the foregoing circumstances, and it is a general purpose of the present invention to provide a technology for processing an XML file of relatively large size in a limited memory space.

### [Means for Solving the Problems]

One embodiment of the present invention relates to a document processing apparatus. This document processing apparatus includes: a DOM generation part which acquires a document structured with a markup language and generates a DOM tree; and a management part which retains part of information on the DOM tree in a memory capable of being used as a work space by a processing system for processing the document, and saves the rest of the information to a storage device other than the memory.

The management part may select information to be saved to the storage device based on a remaining amount of the memory and an amount of information of the DOM tree. The management part may store a pointer in the DOM tree instead of the information saved to the storage device, with the pointer pointing to a location in the storage device where the information is stored. The management part may save a text node included in the document to the storage device. The management part may assign an identifier to a name of an element or attribute included in the document, store the name and the identifier in a table in association with each other, and store the identifier in the DOM tree instead of the name of the element or attribute.

Note that any combination of the aforementioned components or any manifestation of the present invention realized by modification of a method, device, system, and so forth, is effective as an embodiment of the present invention.

### [Advantages]

The present invention provides a technique for appropriately processing data structured by a markup language.

### Brief Description of the Drawings

FIG. 1 is a diagram which shows a configuration of a document processing apparatus according to the background technique.
FIG. 2 is a diagram which shows an example of an XML document which is a processing target.
FIG. 3 is a diagram which shows an example in which the XML document shown in FIG. 2 is mapped to a table described in HTML.
FIG. 4(a) is a diagram which shows an example of a definition file used for mapping the XML document shown in FIG. 2 to the table shown in FIG. 3.
FIG. 4(b) is a diagram which shows an example of a definition file used for mapping the XML document shown in FIG. 2 to the table shown in FIG. 3.
FIG. 5 is a diagram which shows an example of a screen on which the XML document, which has been described in a marks managing vocabulary and which is shown in FIG. 2, is displayed after having been mapped to HTML according to the correspondence shown in FIG. 3.
FIG. 6 is a diagram which shows an example of a graphical user interface provided by a definition file creating unit, which allows the user to create a definition file.
FIG. 7 is a diagram which shows another example of a screen layout created by the definition file creating unit.
FIG. 8 is a diagram which shows an example of an editing screen for an XML document, as provided by the document processing apparatus.
FIG. 9 is a diagram which shows another example of an XML document which is to be edited by the document processing apparatus.
FIG. 10 is a diagram which shows an example of a screen on which the document shown in FIG. 9 is displayed.
Fig. 11 is a diagram which shows a configuration of a document processing apparatus according to an embodiment.
Fig. 12 is a diagram which shows a typical hardware configuration of the document processing apparatus according to the embodiment.

### Reference Numerals

- 12: memory
- 17: storage device
- 20: document processing apparatus
- 22: main control unit
- 24: editing unit
- 30: DOM unit
- 32: DOM provider
- 34: DOM builder
- 36: DOM writer
- 40: CSS unit
- 42: CSS parser
- 44: CSS provider
- 46: rendering unit
- 50: HTML unit
- 52, 62: control unit
- 54, 64: editing unit
- 56, 66: display unit
- 60: SVG unit
- 80: VC unit
- 82: mapping unit
- 84: definition file acquisition unit
- 86: definition file creating unit

### Best Mode for Carrying Out the Invention

### (Base technique)

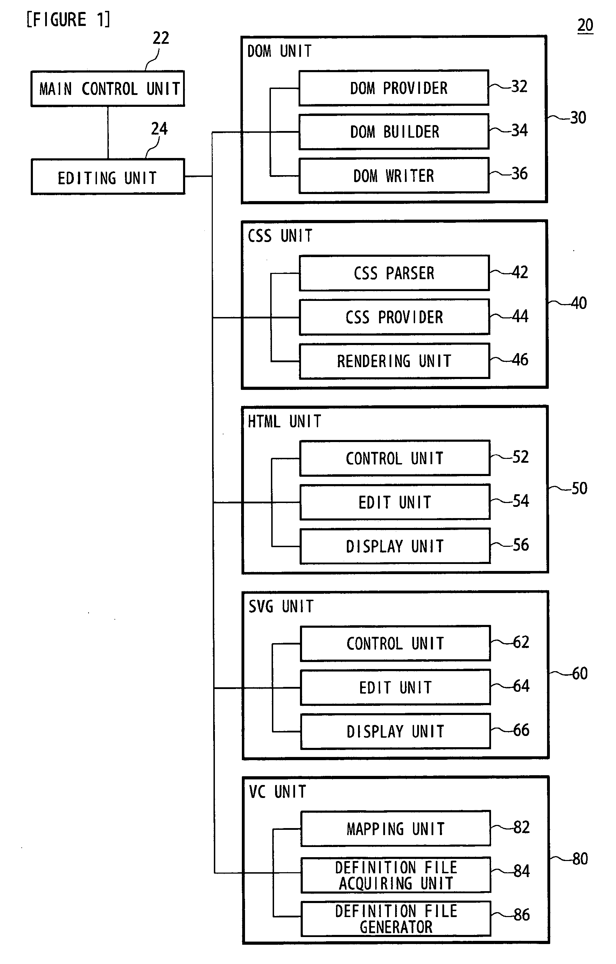

FIG. 1 illustrates a structure of a document processing apparatus 20 according to the base technique. The document processing apparatus 20 processes a structured document where data in the document are classified into a plurality of components having a hierarchical structure. Represented in the base technique is an example in which an XML document, as one type of a structured document, is processed. The document processing apparatus 20 is comprised of a main control unit 22, an editing unit 24, a DOM unit 30, a CSS unit 40, an HTML unit 50, an SVG unit 60 and a VC unit 80 which serves as an example of a conversion unit. In terms of hardware components, these unit structures may be realized by any conventional processing system or equipment, including a CPU or memory of any computer, a memory-loaded program, or the like. Here, the drawing shows a functional block configuration which is realized by cooperation between the hardware components and software components. Thus, it would be understood by those skilled in the art that these function blocks can be realized in a variety of forms by hardware only, software only or the combination thereof.

The main control unit 22 provides for the loading of a plug-in or a framework for executing a command. The editing unit 24 provides a framework for editing XML documents. Display and editing functions for a document in the document processing apparatus 20 are realized by plug-ins, and the necessary plug-ins are loaded by the main control unit 22 or the editing unit 24 according to the type of document under consideration. The main control unit 22 or the editing unit 24 determines which vocabulary or vocabularies describes the content of an XML document to be processed, by referring to a name space of the document to be processed, and loads a plug-in for display or editing corresponding to the thus determined vocabulary so as to execute the display or the editing. For instance, an HTML unit 50, which displays and edits HTML documents, and an SVG unit 60, which displays and edits SVG documents, are implemented in the document processing apparatus 20. That is, a display system and an editing system are implemented as plug-ins for each vocabulary (tag set), so that when an HTML document and an SVG document are edited, the HTML unit 50 and the SVG unit 60 are loaded, respectively. As will be described later, when compound documents, which contain both the HTML and SVG components, are to be processed, both the HTML unit 50 and the SVG unit 60 are loaded.

By implementing the above structure, a user can select so as to install only necessary functions, and can add or delete a function or functions at a later stage, as appropriate. Thus, the storage area of a recording medium, such as a hard disk, can be effectively utilized, and the wasteful use of memory can be prevented at the time of executing programs. Furthermore, since the capability of this structure is highly expandable, a developer can deal with new vocabularies in the form of plug-ins, and thus the development process can be readily facilitated. As a result, the user can also add a function or functions easily at low cost by adding a plug-in or plug-ins.

The editing unit 24 receives an event, which is an editing instruction, from the user via the user interface. Upon reception of such an event, the editing unit 24 notifies a suitable plug-in or the like of this event, and controls the processing such as redoing this event, canceling (undoing) this event, etc.

The DOM unit 30 includes a DOM provider 32, a DOM builder 34 and a DOM writer 36. The DOM unit 30 realizes functions in compliance with a document object model (DOM), which is defined to provide an access method used for handling data in the form of an XML document. The DOM provider 32 is an implementation of a DOM that satisfies an interface defined by the editing unit 24. The DOM builder 34 generates DOM trees from XML documents. As will be described later, when an XML document to be processed is mapped to another vocabulary by the VC unit 80, a source tree, which corresponds to the XML document in a mapping source, and a destination tree, which corresponds to the XML document in a mapping destination, are generated. At the end of editing, for example, the DOM writer 36 outputs a DOM tree as an XML document.

The CSS unit 40, which provides a display function conforming to CSS, includes a CSS parser 42, a CSS provider 44 and a rendering unit 46. The CSS parser 42 has a parsing function for analyzing the CSS syntax. The CSS provider 44 is an implementation of a CSS object and performs CSS cascade processing on the DOM tree. The rendering unit 46 is a CSS rendering engine and is used to display documents, described in a vocabulary such as HTML, which are laid out using CSS.

The HTML unit 50 displays or edits documents described in HTML. The SVG unit 60 displays or edits documents described in SVG. These display/editing systems are realized in the form of plug-ins, and each system is comprised of a display unit (also designated herein as a "canvas") 56 and 66, which displays documents, a control unit (also designated herein as an "editlet") 52 and 62, which transmits and receives events containing editing commands, and an edit unit (also designated herein as a "zone") 54 and 64, which edits the DOM according to the editing commands. Upon the control unit 52 or 62 receiving a DOM tree editing command from an external source, the edit unit 54 or 64 modifies the DOM tree and the display unit 56 or 66 updates the display. These units have a structure similar to the framework of the so-called MVC (Model-View-Controller). With such a structure, in general, the display units 56 and 66 correspond to "View". On the other hand, the control units 52 and 62 correspond to "Controller", and the edit units 54 and 64 and DOM instance corresponds to "Model". The document processing apparatus 20 according to the background technique allows an XML document to be edited according to each given vocabulary, as well as providing a function of editing the HTML document in the form of tree display. The HTML unit 50 provides a user interface for editing an HTML document in a manner similar to a word processor, for example. On the other hand, the SVG unit 60 provides a user interface for editing an SVG document in a manner similar to an image drawing tool.

The VC unit 80 includes a mapping unit 82, a definition file acquiring unit 84 and a definition file generator 86. The VC unit 80 performs mapping of a document, which has been described in a particular vocabulary, to another given vocabulary, thereby providing a framework that allows a document to be displayed and edited by a display/editing plug-in corresponding to the vocabulary to which the document is mapped. In the background technique, this function is called a vocabulary connection (VC). In the VC unit 80, the definition file acquiring unit 84 acquires a script file in which the mapping definition is described. Here, the definition file specifies the correspondence (connection) between the nodes for each node. Furthermore, the definition file may specify whether or not editing of the element values or attribute values is permitted. Furthermore, the definition file may include operation expressions using the element values or attribute values for the node. Detailed description will be made later regarding these functions. The mapping unit 82 instructs the DOM builder 34 to generate a destination tree with reference to the script file acquired by the definition file acquiring unit 84. This manages the correspondence between the source tree and the destination tree. The definition file generator 86 offers a graphical user interface which allows the user to generate a definition file.

The VC unit 80 monitors the connection between the source tree and the destination tree. Upon reception of an editing instruction from the user via a user interface provided by a plug-in that handles a display function, the VC unit 80 first modifies a relevant node of the source tree. As a result, the DOM unit 30 issues a mutation event indicating that the source tree has been modified. Upon reception of the mutation event thus issued, the VC unit 80 modifies a node of the destination tree corresponding to the modified node, thereby updating the destination tree in a manner that synchronizes with the modification of the source tree. Upon reception of a mutation event that indicates that the destination tree has been modified, a plug-in having functions of displaying/editing the destination tree, e.g., the HTML unit 50, updates a display with reference to the destination tree thus modified. Such a structure allows a document described in any vocabulary, even a minor vocabulary used in a minor user segment, to be converted into a document described in another major vocabulary. This enables such a document described in a minor vocabulary to be displayed, and provides an editing environment for such a document.

An operation in which the document processing apparatus 20 displays and/or edits documents will be described herein below. When the document processing apparatus 20 loads a document to be processed, the DOM builder 34 generates a DOM tree from the XML document. The main control unit 22 or the editing unit 24 determines which vocabulary describes the XML document by referring to a name space of the XML document to be processed. If the plug-in corresponding to the vocabulary is installed in the document processing apparatus 20, the plug-in is loaded so as to display/edit the document. If, on the other hand, the plug-in is not installed in the document processing apparatus 20, a check shall be made to see whether a mapping definition file exists or not. And if the definition file exits, the definition file acquiring unit 84 acquires the definition file and generates a destination tree according to the definition, so that the document is displayed/edited by the plug-in corresponding to the vocabulary which is to be used for mapping. If the document is a compound document containing a plurality of vocabularies, relevant portions of the document are displayed/edited by plug-ins corresponding to the respective vocabularies, as will be described later. If the definition file does not exist, a source or tree structure of a document is displayed and the editing is carried out on the display screen.

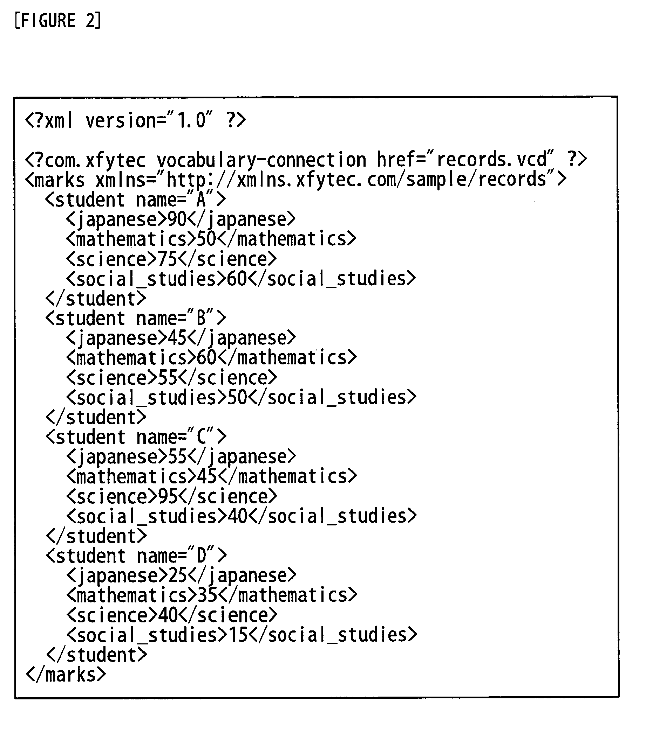

FIG. 2 shows an example of an XML document to be processed. According to this exemplary illustration, the XML document is used to manage data concerning grades or marks that students have earned. A component "marks", which is the top node of the XML document, includes a plurality of components "student" provided for each student under "marks". The component "student" has an attribute "name" and contains, as child elements, the subjects "japanese", "mathematics", "science", and "social_studies". The attribute "name" stores the name of a student. The components "japanese", "mathematics", "science" and "social_studies" store the test scores for the subjects Japanese, mathematics, science, and social studies, respectively. For example, the marks of a student whose name is "A" are "90" for Japanese, "50" for mathematics, "75" for science and "60" for social studies. Hereinafter, the vocabulary (tag set) used in this document will be called "marks managing vocabulary".

Here, the document processing apparatus 20 according to the background technique does not have a plug-in which conforms to or handles the display/editing of marks managing vocabularies. Accordingly, before displaying such a document in a manner other than the source display manner or the tree display manner, the above-described VC function is used. That is, there is a need to prepare a definition file for mapping the document, which has been described in the marks managing vocabulary, to another vocabulary, which is supported by a corresponding plug-in, e.g., HTML or SVG. Note that description will be made later regarding a user interface that allows the user to create the user's own definition file. Now, description will be made below regarding a case in which a definition file has already been prepared.

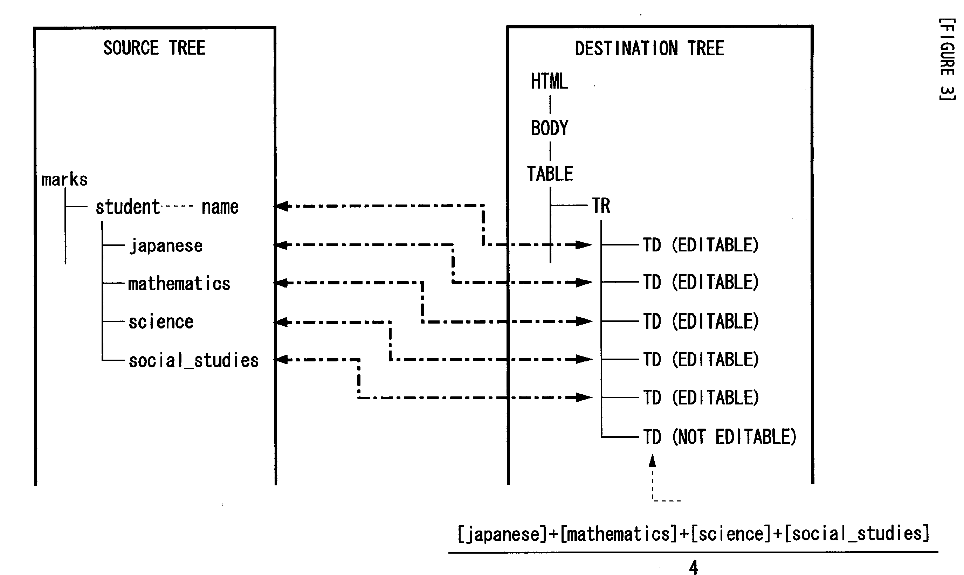

FIG. 3 shows an example in which the XML document shown in FIG. 2 is mapped to a table described in HTML. In an example shown in FIG. 3, a "student" node in the marks managing vocabulary is associated with a row ("TR" node) of a table ("TABLE" node) in HTML. The first column in each row corresponds to an attribute value "name", the second column to a "japanese" node element value, the third column to a "mathematics" node element value, the fourth column to a "science" node element value and the fifth column to a "social_studies" node element value. As a result, the XML document shown in FIG. 2 can be displayed in an HTML tabular format. Furthermore, these attribute values and element values are designated as being editable, so that the user can edit these values on a display screen using an editing function of the HTML unit 50. In the sixth column, an operation expression is designated for calculating a weighted average of the marks for Japanese, mathematics, science and social studies, and average values of the marks for each student are displayed. In this manner, more flexible display can be effected by making it possible to specify the operation expression in the definition file, thus improving the users' convenience at the time of editing. In this example shown in FIG. 3, editing is designated as not being possible in the sixth column, so that the average value alone cannot be edited individually. Thus, in the mapping definition it is possible to specify editing or no editing so as to protect the users against the possibility of performing erroneous operations.

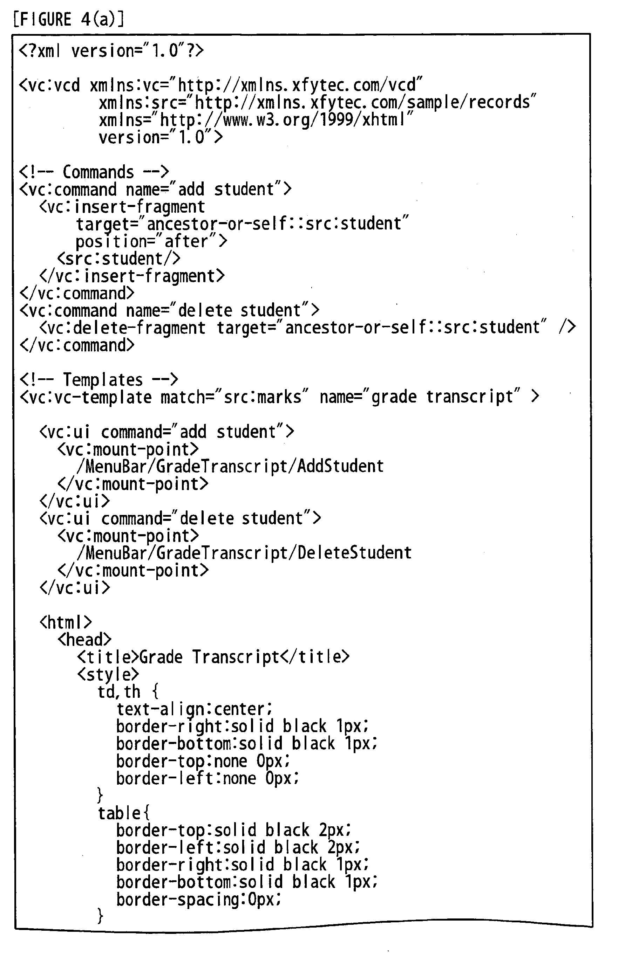

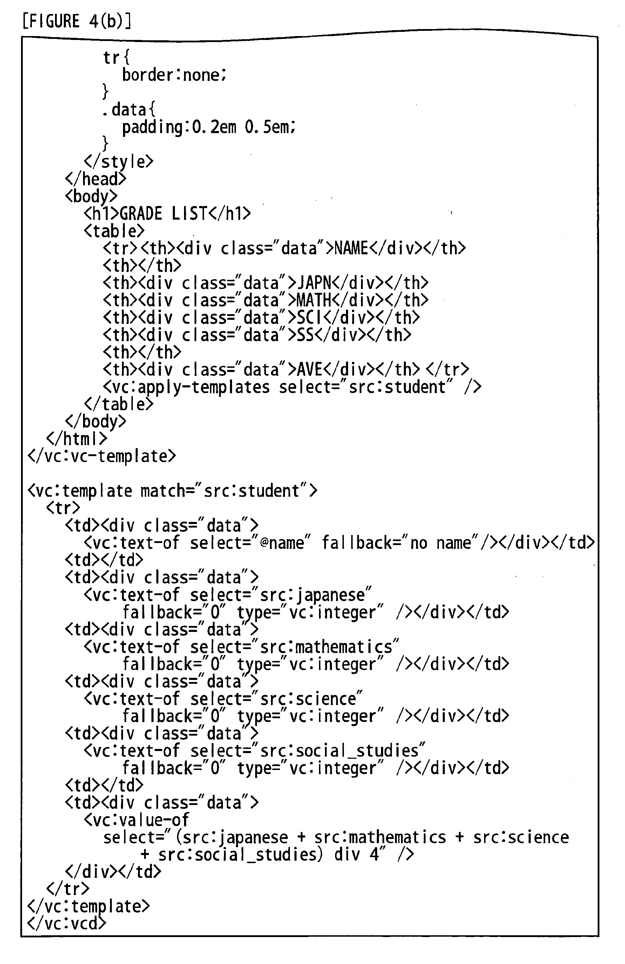

FIG. 4(a) and FIG. 4(b) illustrate an example of a definition file to map the XML document shown in FIG. 2 to the table shown in FIG. 3. This definition file is described in script language defined for use with definition files. In the definition file, definitions of commands and templates for display are described. In the example shown in FIG. 4(a) and FIG. 4(b), "add student" and "delete student" are defined as commands, and an operation of inserting a node "student" into a source tree and an operation of deleting the node "student" from the source tree, respectively, are associated with these commands. Furthermore, the definition file is described in the form of a template, which describes that a header, such as "name" and "japanese", is displayed in the first row of a table and the contents of the node "student" are displayed in the second and subsequent rows. In the template displaying the contents of the node "student", a term containing "text-of" indicates that editing is permitted, whereas a term containing "value-of" indicates that editing is not permitted. Among the rows where the contents of the node "student" are displayed, an operation expression "(src:japanese + src:mathematics + scr:science + scr:social_studies) div 4" is described in the sixth row. This means that the average of the student's marks is displayed.

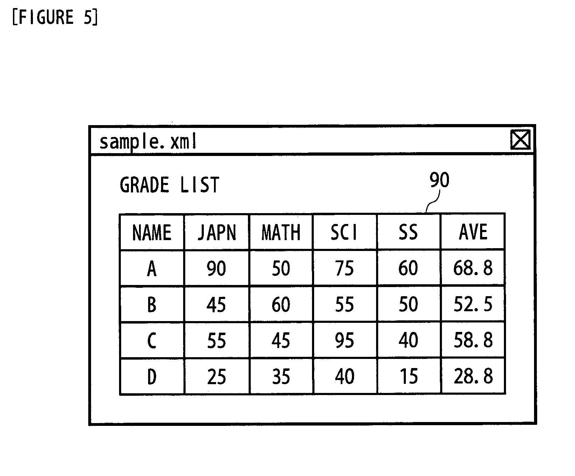

FIG. 5 shows an example of a display screen on which an XML document described in the marks managing vocabulary shown in FIG. 2 is displayed by mapping the XML document to HTML using the correspondence shown in Fig. 3. Displayed from left to right in each row of a table 90 are the name of each student, marks for Japanese, marks for mathematics, marks for science, marks for social studies and the averages thereof. The user can edit the XML document on this screen. For example, when the value in the second row and the third column is changed to "70", the element value in the source tree corresponding to this node, that is, the marks of student "B" for mathematics are changed to "70". At this time, in order to have the destination tree follow the source tree, the VC unit 80 changes a relevant portion of the destination tree accordingly, so that the HTML unit 50 updates the display based on the destination tree thus changed. Hence, the marks of student "B" for mathematics are changed to "70", and the average is changed to "55" in the table on the screen.

On the screen as shown in FIG. 5, commands like "add student" and "delete student" are displayed in a menu as defined in the definition file shown in FIG. 4(a) and FIG. 4(b). When the user selects a command from among these commands, a node "student" is added or deleted in the source tree. In this manner, with the document processing apparatus 20 according to the background technique, it is possible not only to edit the element values of components in a lower end of a hierarchical structure but also to edit the hierarchical structure. An edit function for editing such a tree structure may be presented to the user in the form of commands. Furthermore, a command to add or delete rows of a table may, for example, be linked to an operation of adding or deleting the node "student". A command to embed other vocabularies therein may be presented to the user. This table may be used as an input template, so that marks data for new students can be added in a fill-in-the-blank format. As described above, the VC function allows a document described in the marks managing vocabulary to be edited using the display/editing function of the HTML unit 50.

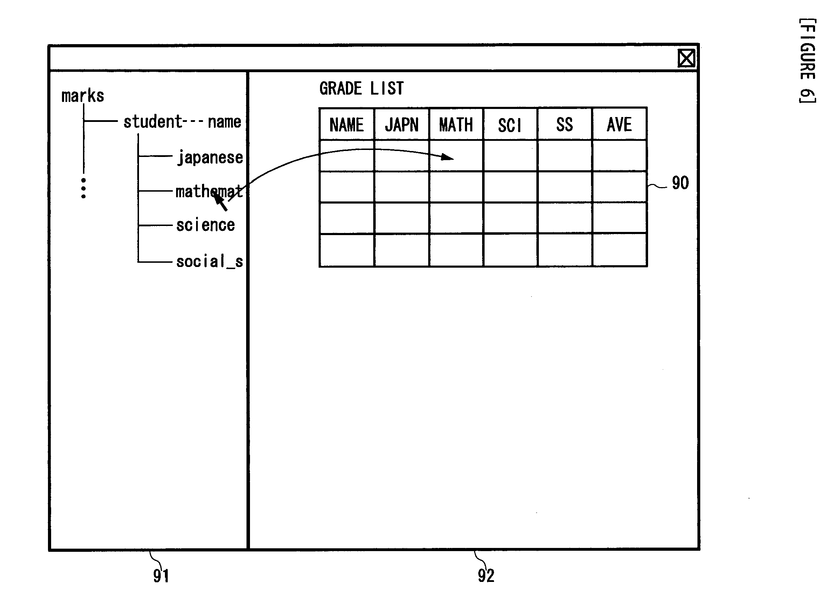

FIG. 6 shows an example of a graphical user interface, which the definition file generator 86 presents to the user, in order for the user to generate a definition file. An XML document to be mapped is displayed in a tree in a left-hand area 91 of a screen. The screen layout of an XML document after mapping is displayed in a right-hand area 92 of the screen. This screen layout can be edited by the HTML unit 50, and the user creates a screen layout for displaying documents in the right-hand area 92 of the screen. For example, a node of the XML document which is to be mapped, which is displayed in the left-hand area 91 of the screen, is dragged and dropped into the HTML screen layout in the right-hand area 92 of the screen using a pointing device such as a mouse, so that a connection between a node at a mapping source and a node at a mapping destination is specified. For example, when "mathematics," which is a child element of the element "student," is dropped to the intersection of the first row and the third column in a table 90 on the HTML screen, a connection is established between the "mathematics" node and a "TD" node in the third column. Either editing or no editing can be specified for each node. Moreover, the operation expression can be embedded in a display screen. When the screen editing is completed, the definition file generator 86 generates definition files, which describe connections between the screen layout and nodes.

Viewers or editors which can handle major vocabularies such as XHTML, MathML and SVG have already been developed. However, it does not serve any practical purpose to develop dedicated viewers or editors for such documents described in the original vocabularies as shown in FIG. 2. If, however, the definition files for mapping to other vocabularies are created as mentioned above, the documents described in the original vocabularies can be displayed and/or edited utilizing the VC function without the need to develop a new viewer or editor.

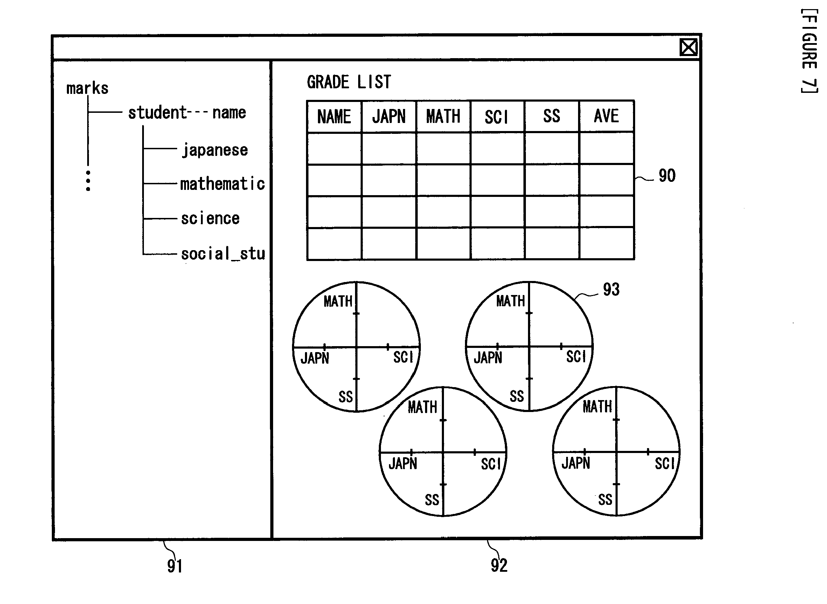

FIG. 7 shows another example of a screen layout generated by the definition file generator 86. In the example shown in FIG. 7, a table 90 and circular graphs 93 are created on a screen for displaying XML documents described in the marks managing vocabulary. The circular graphs 93 are described in SVG. As will be discussed later, the document processing apparatus 20 according to the background technique can process a compound document described in the form of a single XML document according to a plurality of vocabularies. That is why the table 90 described in HTML and the circular graphs 93 described in SVG can be displayed on the same screen.

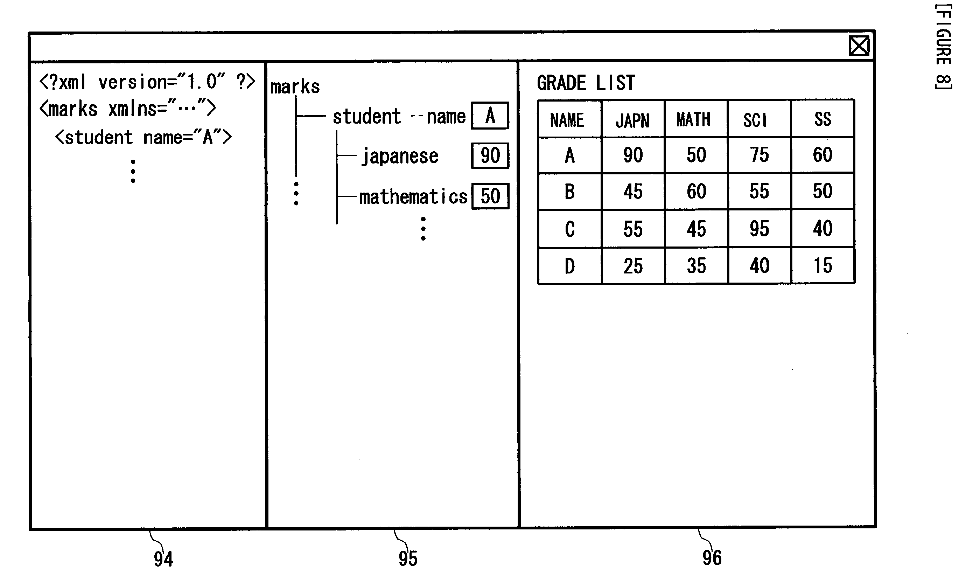

FIG. 8 shows an example of a display medium, which in a preferred but non-limiting embodiment is an edit screen, for XML documents processed by the document processing apparatus 20. In the example shown in FIG. 8, a single screen is partitioned into a plurality of areas and the XML document to be processed is displayed in a plurality of different display formats at the respective areas. The source of the document is displayed in an area 94, the tree structure of the document is displayed in an area 95, and the table shown in FIG. 5 and described in HTML is displayed in an area 96. The document can be edited in any of these areas, and when the user edits content in any of these areas, the source tree will be modified accordingly, and then each plug-in that handles the corresponding screen display updates the screen so as to effect the modification of the source tree. Specifically, display units of the plug-ins in charge of displaying the respective edit screens are registered in advance as listeners for mutation events that provide notice of a change in the source tree. When the source tree is modified by any of the plug-ins or the VC unit 80, all the display units, which are displaying the edit screen, receive the issued mutation event(s) and then update the screens. At this time, if the plug-in is executing the display through the VC function, the VC unit 80 modifies the destination tree following the modification of the source tree. Thereafter, the display unit of the plug-in modifies the screen by referring to the destination tree thus modified.

For example, when the source display and tree-view display are implemented by dedicated plug-ins, the source-display plug-in and the tree-display plug-in execute their respective displays by directly referring to the source tree without involving the destination tree. In this case, when the editing is done in any area of the screen, the source-display plug-in and the tree-display plug-in update the screen by referring to the modified source tree. Also, the HTML unit 50 in charge of displaying the area 96 updates the screen by referring to the destination tree, which has been modified following the modification of the source tree.

The source display and the tree-view display can also be realized by utilizing the VC function. That is to say, an arrangement may be made in which the source and the tree structure are laid out in HTML, an XML document is mapped to the HTML structure thus laid out, and the HTML unit 50 displays the XML document thus mapped. In such an arrangement, three destination trees in the source format, the tree format and the table format are generated. If the editing is carried out in any of the three areas on the screen, the VC unit 80 modifies the source tree and, thereafter, modifies the three destination trees in the source format, the tree format and the table format. Then, the HTML unit 50 updates the three areas of the screen by referring to the three destination trees.

In this manner, a document is displayed on a single screen in a plurality of display formats, thus improving a user's convenience. For example, the user can display and edit a document in a visually easy-to-understand format using the table 90 or the like while understanding the hierarchical structure of the document by the source display or the tree display. In the above example, a single screen is partitioned into a plurality of display formats, and they are displayed simultaneously. Also, a single display format may be displayed on a single screen so that the display format can be switched according to the user's instructions. In this case, the main control unit 22 receives from the user a request for switching the display format and then instructs the respective plug-ins to switch the display.

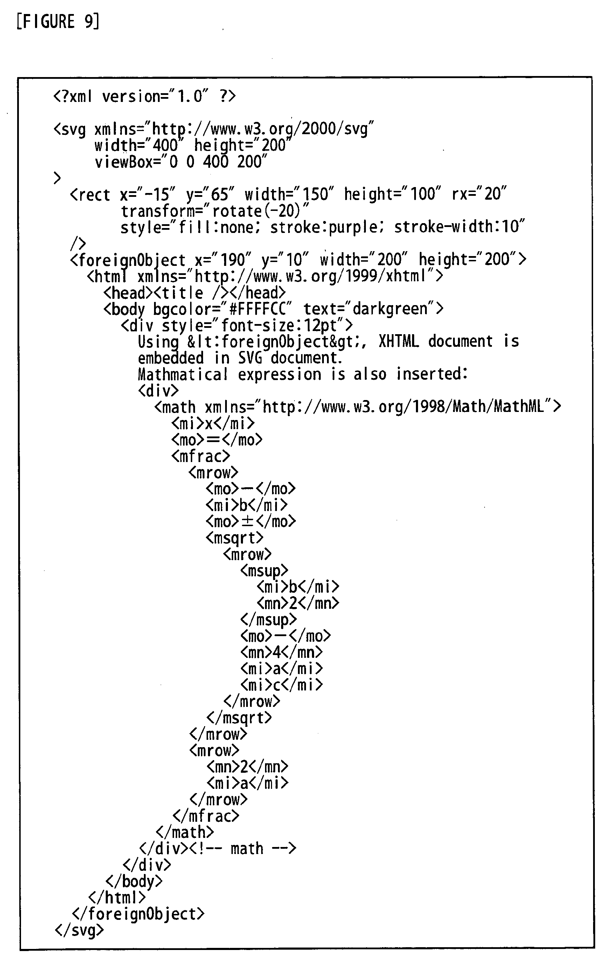

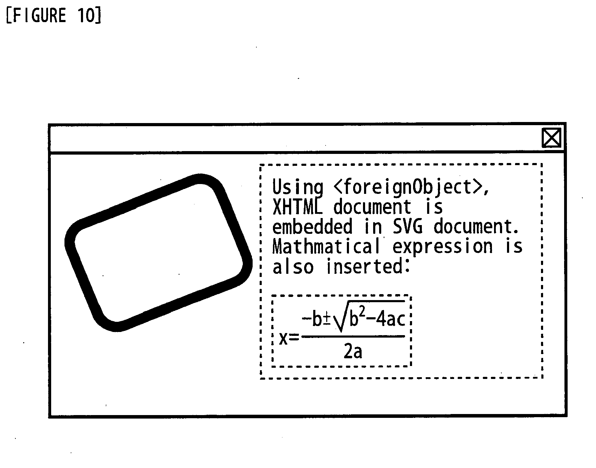

FIG. 9 illustrates another example of an XML document edited by the document processing apparatus 20. In the XML document shown in FIG. 9, an XHTML document is embedded in a "foreignObject" tag of an SVG document, and the XHTML document contains an equation described in MathML. In this case, the editing unit 24 assigns the rendering job to an appropriate display system by referring to the name space. In the example illustrated in FIG. 9, first, the editing unit 24 instructs the SVG unit 60 to render a rectangle, and then instructs the HTML unit 50 to render the XHTML document. Furthermore, the editing unit 24 instructs a MathML unit (not shown) to render an equation. In this manner, the compound document containing a plurality of vocabularies is appropriately displayed. FIG. 10 illustrates the resulting display.

The displayed menu may be switched corresponding to the position of the cursor (carriage) during the editing of a document. That is, when the cursor lies in an area where an SVG document is displayed, the menu provided by the SVG unit 60, or a command set which is defined in the definition file for mapping the SVG document, is displayed. On the other hand, when the cursor lies in an area where the XHTML document is displayed, the menu provided by the HTML unit 50, or a command set which is defined in the definition file for mapping the HTML document, is displayed. Thus, an appropriate user interface can be presented according to the editing position.

In a case that there is neither a plug-in nor a mapping definition file suitable for any one of the vocabularies according to which the compound document has been described, a portion described in this vocabulary may be displayed in source or in tree format. In the conventional practice, when a compound document is to be opened where another document is embedded in a particular document, their contents cannot be displayed without the installation of an application to display the embedded document. According to the background technique, however, the XML documents, which are composed of text data, may be displayed in source or in tree format so that the contents of the documents can be ascertained. This is a characteristic of the text-based XML documents or the like.

Another advantageous aspect of the data being described in a text-based language, for example, is that, in a single compound document, a part of the compound document described in a given vocabulary can be used as reference data for another part of the same compound document described in a different vocabulary. Furthermore, when a search is made within the document, a string of characters embedded in a drawing, such as SVG, may also be search candidates.

In a document described in a particular vocabulary, tags belonging to other vocabularies may be used. Though such an XML document is generally not valid, it can be processed as a valid XML document as long as it is well-formed. In such a case, the tags thus inserted that belong to other vocabularies may be mapped using a definition file. For instance, tags such as "Important" and "Most Important" may be used so as to display a portion surrounding these tags in an emphasized manner, or may be sorted out in the order of importance.

When the user edits a document on an edit screen as shown in FIG. 10, a plug-in or a VC unit 80, which is in charge of processing the edited portion, modifies the source tree. A listener for mutation events can be registered for each node in the source tree. Normally, a display unit of the plug-in or the VC unit 80 conforming to a vocabulary that belongs to each node is registered as the listener. When the source tree is modified, the DOM provider 32 traces toward a higher hierarchy from the modified node. If there is a registered listener, the DOM provider 32 issues a mutation event to the listener. For example, referring to the document shown in FIG. 9, if a node which lies lower than the <html> node is modified, the mutation event is notified to the HTML unit 50, which is registered as a listener to the <html> node. At the same time, the mutation event is also notified to the SVG unit 60, which is registered as a listener in an <svg> node, which lies upper to the <html> node. At this time, the HTML unit 50 updates the display by referring to the modified source tree. Since the nodes belonging to the vocabulary of the SVG unit 60 itself are not modified, the SVG unit 60 may disregard the mutation event.

Depending on the contents of the editing, modification of the display by the HTML unit 50 may change the overall layout. In such a case, the layout is updated by a screen layout management mechanism, e.g., the plug-in that handles the display of the highest node, in increments of display regions which are displayed according to the respective plug-ins. For example, in a case of expanding a display region managed by the HTML unit 50, first, the HTML unit 50 renders a part managed by the HTML unit 50 itself, and determines the size of the display region. Then, the size of the display area is notified to the component that manages the screen layout so as to request the updating of the layout. Upon receipt of this notice, the component that manages the screen layout rebuilds the layout of the display area for each plug-in. Accordingly, the display of the edited portion is appropriately updated and the overall screen layout is updated.

### (Embodiment)

An embodiment proposes a technology for handling a large document, wherein the entire document is not retained as a DOM tree in a memory, but part of the information is saved to a virtual memory space of a storage device such as a hard disk, thereby reducing memory consumption.

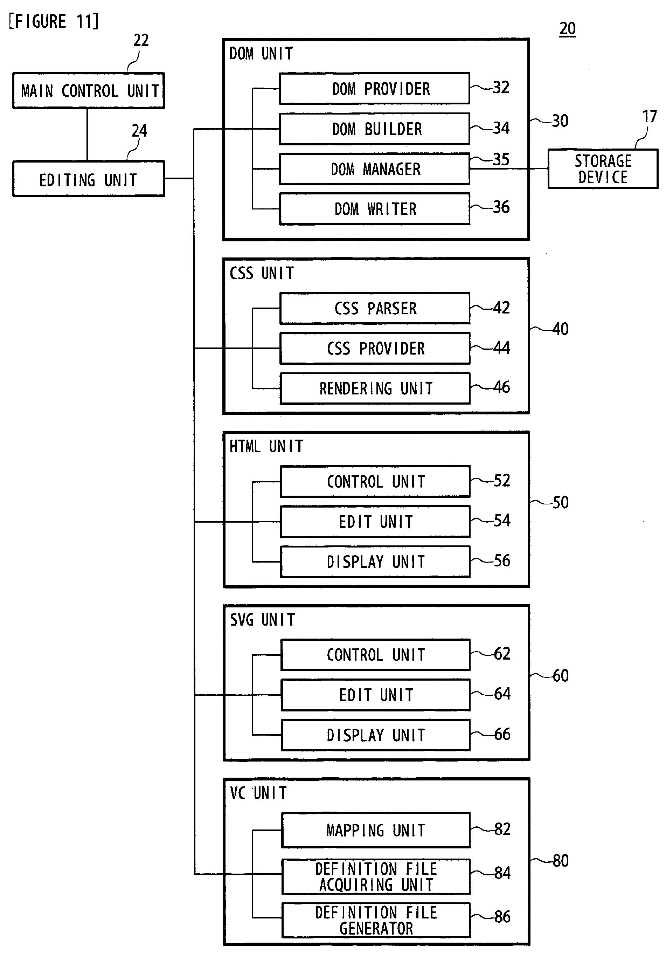

Fig. 11 shows the configuration of a document processing apparatus according to the present embodiment. The document processing apparatus 20 of the present embodiment includes a DOM management part 35 and a storage device 17 in addition to the configuration of the document processing apparatus 10 according to the preconditional technology shown in Fig. 1. The rest of the configuration and operation are the same as in the preconditional technology. The present embodiment will deal mainly with differences from the preconditional technology.

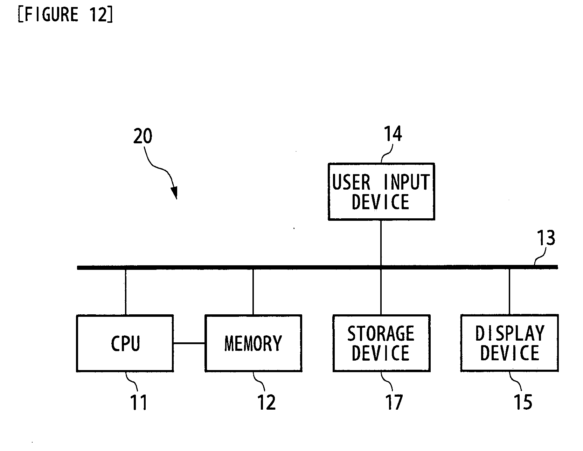

Fig. 12 shows a typical hardware configuration of the document processing apparatus according to the present embodiment. The document processing apparatus 20 of the present embodiment can be realized by an apparatus such as a personal computer, and includes a CPU 11, a memory 12, a user input device 14, a display device 15, the storage device 17, and a bus 13 which connects these electrically. The CPU 11 is a general purpose processor, and executes a document processing program which is stored in the storage device 17 or the like. The memory 12 is a storage device directly accessible by the CPU 11. The document processing program executed by the CPU 11 can use it as a work space. The memory 12 is typically composed of a storage device capable of reading and writing at high speed, such as a DRAM, an SDRAM, or the like memory. The storage device 17 is an external storage device such as a hard disk, a CD-ROM drive, a DVD drive, or the like device, and is typically composed of a storage device that is slower and cheaper than the memory 12. The document processing program executed by the CPU 11 processes documents according to user instructions input from the user input device 14, and displays them on the display device 15.

As described in the preconditional technology, the document processing apparatus 20, when acquiring an XML document, generates a DOM tree using the DOM generation part 34 and retains the same in the memory 12. Then, it uses standard DOM APIs and extended facets thereof to make modifications on the nodes of the DOM, thereby editing the document. The DOM tree contains not only text information written in the document but also member functions that provide the standard DOM APIs and information that indicates the tree structure allowing for fast tree traversal, such as a pointer to a child node and a pointer to a parent node. The amount of data thereof is thus typically larger than the amount of data in the original XML document. If the XML document to be edited is so large that the DOM of the entire document exceeds the capacity of the memory 12 or it is impossible to reserve an amount of the memory 12 necessary for the operation of the CPU 11, the DOM management part 35 retains part of the information on the DOM tree into the memory 12 and saves the rest of the information to the storage device 17. For example, the DOM management part 35 retains information indicating the tree structure in the memory 12, and saves information such as element names, attribute names, element values, and attribute values to the virtual memory space of the storage device 17 by priority.

When saving data on the DOM tree to the storage device 17, the DOM management part 35 stores a pointer to the DOM tree instead of the data, the pointer pointing to a location in the storage device 17 where the data is stored. When an access to that data occurs, the DOM management part 35 acquires the pointer of the data, and reads the data from the storage device 17 and stores it to the memory 12.

The DOM management part 35, when reading a large document, may generate a source tree once before it saves part of the information included in the source tree to the virtual memory space of the storage device 17 such as a hard disk. Otherwise, it may determine, during parsing, whether or not to store information to the memory 12, so that information to be saved to the storage device 17 is saved to the storage device 17 without generation of the source tree in the memory. For example, when a text node appears during parsing, a pointer on a file system inside the storage device 17 that contains the text node may be retained in the memory 12 instead of contents of the text node, thereby omitting the parsing of the text node.

The DOM management part 35 may determine whether or not to save information to the storage device 17 by comparing the memory consumption of the source tree generated with the amount of memory remaining at the present time. The DOM management part 35 may also select which information to save to the storage device 17 based on the memory consumption of the DOM tree, the remaining amount of the memory 12, the remaining amount of the storage device 17, the operating speed of the CPU 11, and the like. The pieces of data stored in the DOM tree may be prioritized so that the data is saved to the storage device 17 in order from the lowest priority when the remaining amount of the memory 12 falls below a predetermined value. For example, text nodes may be given lower priorities so that they are saved to the storage device 17 preferentially.

When the DOM management part 35 accepts a DOM operation from the processing system, it desirably retains the information indicating the structure of the DOM tree in the memory so that the processing of evaluating Xpath expressions and traversing the DOM tree can be executed on-memory. This can minimize the number of accesses to the storage device 17, providing improved operating speed. With regard to structure, the DOM tree may be retained as a bidirectional list or may be retained as a binary tree. When the tree structure is retained in the memory 12 as a bidirectional list, the DOM management part 35 may retain pointers to five nodes, such as a parent, immediate brothers, a first child, and a last child, with respect to each individual node. This makes it possible to traverse the entire tree accurately at high speed.

If a schemer or the like that defines the document type is available, which information to save to the storage device 17 may be determined based on the document type defined. For example, if the table-rendering vocabulary includes an attribute "border," then attribute values for the "border" attribute may be retained in the memory 12 since it is expected that the "border" attribute will be referred to frequently when the processing systems performs the layout. The information to be saved to the storage device 17 may also be changed dynamically in the course of processing. For example, information that has initially been saved to the storage device 17 may be stored in the memory 12 if it will be referred to frequently in the course of processing.

The DOM management part 35 may save such information as element names, attribute names, attribute values, and element values from the memory 12 to the storage device 17. The DOM management part 35 may retain information on nodes around displayed nodes in the memory and save the element names, attribute names, attribute values, element values, and the like of non-displayed nodes to the storage device 17. When the user moves the display area by scrolling or the like, the DOM management part 35 reads from the storage device 17 to the memory 12 the information on nodes that are included in the area to be displayed. In this instance, it may discard from the memory 12 the information on nodes that lie in the areas that are disappearing.

Element names and attribute names can be used frequently when evaluating Xpath expressions. The DOM management part 35 may thus associate the names of elements or attributes included in the document with IDs, Huffman codes, or the like to create a table, and retain it in the memory 12. The DOM management part 35 may store the assigned identifiers in the DOM tree instead of the names of the elements or attributes. In situations where the same element names or attribute names appear frequently, the substitution with IDs, Huffman codes, or the like can reduce the amount of data of the DOM tree significantly.

The DOM management part 35 may save such information as attribute names and element names to the storage device of another network-connected apparatus as a virtual memory space. For example, a virtual memory space provision server or the like may be prepared to save part of a DOM tree when handling a large document, so that the virtual memory space provision server acquires and retains part of the DOM tree from the document processing apparatus 20. In this case, a function for exchanging DOM APIs between the document processing apparatus 20 and the virtual memory space provision server over the network may be provided.

As detailed above, according to the technology of the present embodiment, it is possible to process even a large document efficiently at high speed. The memory consumption for document processing can also be reduced.

Up to this point, the present invention has been described in conjunction with the embodiment thereof. This embodiment has been given solely by way of illustration. It will be understood by those skilled in the art that various modifications may be made to combinations of the foregoing components and processes, and all such modifications are also intended to fall within the scope of the present invention.

While the embodiment has dealt with the case of processing XML documents, the document processing apparatus 20 of the present embodiment can also process documents that are written in other markup languages such as SGML and HTML.

### Industrial Applicability

The present invention may use a data processing apparatus which processes data structured with a markup language.

## Claims

1. A document processing apparatus, comprising:
a DOM generation part which acquires a document structured with a markup language and generates a DOM tree; and
a management part which retains part of information on the DOM tree in a memory directly accessible by a processing system for processing the document, and saves the rest of the information to a storage device other than the memory.

2. A document processing apparatus according to claim 1, wherein the management part selects information to be saved to the storage device based on a remaining amount of the memory and an amount of information of the DOM tree.

3. A document processing apparatus according to claim 1 or 2, wherein the management part stores a pointer in the DOM tree instead of the information saved to the storage device, the pointer pointing to a location in the storage device where the information is stored.

4. A document processing apparatus according to any of claims 1 to 3, wherein the management part saves a text node included in the document to the storage device.

5. A document processing apparatus according to any of claims 1 to 4, wherein the management part assigns an identifier to a name of an element or attribute included in the document, stores the name and the identifier in a table in association with each other, and stores the identifier in the DOM tree instead of the name of the element or attribute.

6. A document processing method, comprising:
acquiring a document structured with a markup language, and generating a DOM tree; and
retaining part of information on the DOM tree in a memory directly accessible by a processing system for processing the document, and saving the rest of the information to a storage device other than the memory.

7. A program product comprising:
a module for acquiring a document structured with a markup language, and generating a DOM tree; and
a module for retaining part of information on the DOM tree in a memory directly accessible by a processing system for processing the document, and saving the rest of the information to a storage device other than the memory.
